# EUROPEAN PATENT APPLICATION

(11) **EP 3 434 375 A2**
(43) Date of publication of application: **30.01.2019**
(21) Application number: 18168035.6
(22) Date of filing: 18.04.2018
(51) Int. Cl.: B03D 1/04, B03D 1/14, B03D 1/02

(54) **SYSTEM AND METHOD FOR FOAM FRACTIONATION**

(30) Priority: 18.04.2017 US 201762486889 P
(71) Applicant: Pentair Aquatic Eco-Systems, Inc., Apopka, FL 32703 (US)
(72) Inventor: MARCHAND, Kevin, Duncan, British Columbia V9L 1L7 (CA); WHITE, Jason, Nanaimo, British Columbia V9S 3N9 (CA); PIGGOTT, Stephen, Nanaimo, British Columbia V9S 5N3 (CA)
(74) Representative: Barker Brettell LLP

(57) **Abstract**

Embodiments of the disclosure provide a foam fractionation method and system that include a foam collection container 70 having a body 72, a collection tube 84 coupled to the collection container, and a foam collection conduit 114 coupled with foam removal piping 82 disposed within a chamber 152 formed by the body of the collection cone. The collection container and the collection tube are coupled to allow for pressurization within the chamber. A mouth 108 of the foam collection conduit is operable to receive foam.

## Description

### CROSS-REFERENCE TO RELATED APPLICATIONS

The present application claims the benefit of U.S. Provisional Patent Application No. 62/486,889, filed April 18, 2017, and entitled "System and Method for Foam Fractionation."

### BACKGROUND

Unfiltered fine particles in recirculating aquaculture systems can promote the development of bacterial cultures that consume oxygen and generate unwanted carbon dioxide and/or ammonia. Such particles can also irritate fish gills, which can make fish within the aquaculture system more susceptible to disease. Foam fractionators or protein skimmers can be used as an effective treatment for the removal of fine particles, which include organic compounds such as food and waste, in aquaculture systems. Fractionators or skimmers can also be used to harvest algae and/or phytoplankton gently enough to maintain viability for culturing or commercial sale as live cultures. Systems employing foam fractionation are commonly used in commercial applications such as municipal water treatment facilities, large scale aquaculture facilities, and public aquariums. When used in recirculating aquaculture systems, foam fractionators are typically stand-alone treatment vessels that are operated in a side-stream pumping system. Due to the difficulty of scaling foam fractionation devices, most recirculating aquaculture systems only treat a portion of the total flow with foam fractionation.

Foam fractionation systems generally operate to remove organic compounds, which may include proteins and/or amino acids, by leveraging the polarity of the organic compound itself. Due to an inherent electrical charge of organic compounds, water-borne proteins are either repelled or attracted by the air and water interface when bubbles are formed. Such molecules are typically either hydrophobic, such as fats and oils, or hydrophilic, such as salt, sugar, ammonia, most amino acids, and most inorganic compounds. However, some larger organic molecules can have both hydrophobic and hydrophilic portions and are referred to as being amphipathic or amphiphilic. Some commercial protein skimmers work by generating a large air/water interface by injecting large numbers of bubbles into a water column, thus, creating the bubble surfaces upon which molecules can attach. In general, achieving smaller bubbles results in a more effective protein skimming process because the outer surface area of small bubbles occupying a volume is greater than the outer surface area of large bubbles occupying the same volume.

Thus, large numbers of small bubbles can present an enormous air and water interface where hydrophobic organic molecules and amphipathic organic molecules collect or adsorb at the surface of the air bubbles. Also, fluid movement hastens the diffusion of organic molecules from the water because more organic molecules are effectively adsorbed when promulgating more contact between these particles and the surface of the air bubbles. This process continues until the interface is saturated with air bubbles, which can create foam, unless the bubbles are removed from the water or they burst, in which case the accumulated molecules are released back into the water, though now transported closer to the surface where they can be picked up by other bubbles.

As the bubbles migrate toward the water surface due to a buoyant force, the bubbles form a dense cluster, thereby creating a foam that carries the organic molecules attached to the outer bubble surfaces to a skimmate collection device or a waste collector. Thereafter, the organic molecules, and any inorganic molecules that have become bound to the organic molecules, can be exported from the water system. Existing foam fractionation systems are generally capable of removing foam from small-scale systems, or portions of large scale systems, however, a need exists to allow for a modular, controllable, and scalable foam fractionation system that allows for treatment of the full flow of water in large-scale aquaculture systems.

Therefore, it is desirable to develop a foam fractionation device that provides for the removal of foam having undesirable molecules trapped in foam via a controllable, efficient, and modular system.

### SUMMARY

Some embodiments provide a foam fractionation device that includes a foam collection container having a body, a collection tube coupled to the collection container, and a foam collection conduit coupled with foam removal piping disposed within a chamber formed by the body of the foam collection container. The foam collection container and the collection tube are coupled to allow for pressurization within the chamber. A mount of the foam collection conduit is operable to receive foam.

Other embodiments include a foam fractionation system comprising a channel having a first portion and a second portion, a sump disposed within the channel intermediate the first portion and the second portion, an air injection system disposed along a bottom surface of the sump, and a foam fractionation device disposed within the sump above the air injection system. The device includes a foam collection cone forming a chamber, a collection tube coupled with the collection cone, and a foam collection conduit coupled with foam removal piping disposed within the body of the foam collection cone. In some embodiments, the system includes a first wall disposed between the sump and the second portion of the channel.

Further embodiments include a method of fractionation that includes flowing water through a channel having a first portion and a second portion, injecting air through an air injection system disposed within a sump, the sump located intermediate the first portion and the second portion of the channel, receiving foam into a foam fractionation device, the foam fractionation device disposed within the sump above the air injection system, the device comprising a foam collection container defining a chamber, a collection tube coupled with the foam collection cone, and a foam collection conduit coupled with foam removal piping disposed within the chamber defined by the foam collection conduit, and pressurizing the foam removal piping with a pressure regulating device to regulate an internal water level within the chamber.

### DESCRIPTION OF THE DRAWINGS

FIG. 1 is a schematic view of a first embodiment of a system employing a plurality of foam fractionation devices as disclosed herein.
FIG. 2 is a cross-sectional view of one of a foam fractionation device of a second embodiment of a foam fractionation device taken generally along a line such as 2-2 of FIG. 1.
FIG. 3 is an isometric cross-sectional view of two foam fractionation devices taken generally along a line such as 3-3 of FIG. 1, the foam fractionation devices being similar to those of FIG. 2.
FIG. 4 is a diagram illustrating a method of foam fractionation as disclosed herein.
FIGS. 5 and 6 are schematic views of additional embodiments of foam fractionation devices.

### DETAILED DESCRIPTION

Before any embodiments of the invention are explained in detail, it is to be understood that the embodiments disclosed herein are not limited in application to the details of construction and the arrangement of components set forth in the following description or illustrated in the following drawings. The embodiments disclosed herein are capable of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are herein used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments disclosed herein are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

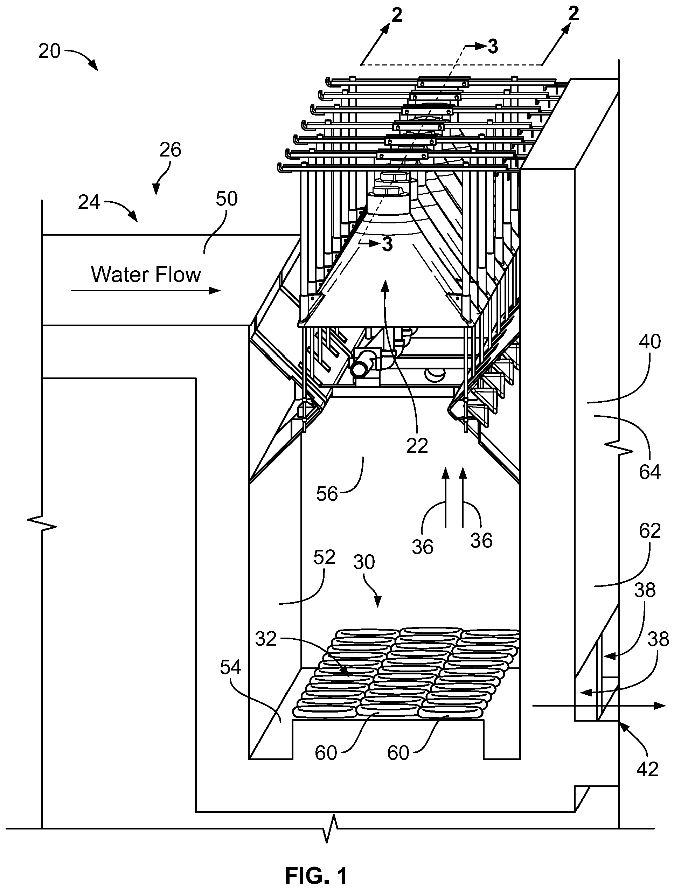

FIGS. 1-3 illustrate embodiments of fractionation devices 22 of different full flow fractionation systems 20 that includes a plurality of fractionation devices 22, which are generally modular and scalable. In some embodiments, only a single fractionation device 22 may be utilized, but in other embodiments, any suitable number of fractionation devices 22 may be utilized. Referring to FIG. 1, a plurality of the fractionation devices 22 are disposed in-line within a flow channel 24. The plurality of devices 22 may be installed orthogonal to the direction of flow of water, as shown in FIG. 1, within a first portion 26 of the flow channel 24. As will be described in greater detail below, water flows through the first portion 26 of the flow channel 24 into a sump 30, where bubbles are formed by an air release system 32 at a lower end of the sump 30. The bubbles move upward in the water flowing through the sump 30 due to a buoyant force in the direction of arrows 36. The bubbles carry particles disposed along an outer surface of the bubbles to the surface of the water, where the bubbles form a foam that is removed from the water through the one or more modular fractionation device 22, as discussed in more detail below. After passing by the air release system 32 within the sump 30, the water moves through a plurality of apertures 38 or other conduits within a first wall 40 to a second portion 42 of the flow channel 24.

Still referring to FIG. 1, the first portion 26 of the flow channel 24 is partially defined by a first bottom surface 50. The sump 30 is partially defined by the first wall 40, a second wall 52 parallel to the first wall 40 and which extends from the first bottom surface 50, a second bottom surface 54 within which the air release system 32 is positioned, a third wall 56 disposed orthogonally to and between the first and second walls 40, 52, and a fourth wall (not shown) parallel with the third wall 56 such that the fourth wall encloses the sump 30. In some embodiments, fewer or more than four walls may be included. In some embodiments, a cylindrical first wall 40 may be used. Disposed along the second bottom surface 54 is the air release system 32, which includes a plurality of air injectors 60. While the term air injector 60 is used herein, air injection can occur by any suitable method or device, for example, one or more of a venture, an aerator such as a Toring Turbine®, bubble diffuser, any other suitable devices that create small bubbles, or combinations thereof. In some embodiments, the air release system 32 is located along a different surface defining the flow channel 24. In some embodiments, the first wall 40 includes the plurality of apertures 38 disposed along a lower end 62 thereof. In some embodiments, the plurality of apertures 38 are disposed along a medial portion 64 of the first wall 40. The plurality of apertures 38 allow for flow of water between the sump 30 and the second portion 42 of the flow channel 24.

The air injectors 60 of the air release system 32 are operable to release air into the water within the sump 30. The one or more air injectors 60 may be formed in rows and/or columns along the second bottom surface 54 within the sump 30. The one or more air injectors 60 release air into the water within the sump 30, thereby forming bubbles. It is contemplated that any size bubble may be formed by the one or more air injectors 60, however, smaller bubbles may be used because small bubbles can be more effective at capturing more organic matter as the bubbles rise to a surface of the water. Further, the rate of air release may be adjusted, or adjustable by a controller or a human operator. In some embodiments, the rate of injection of the bubbles may be adjusted based on feedback received from one or more sensors within the system 20, as described in greater detail hereinafter below. The foam fractionation device 22 and system 20 are contemplated for application in freshwater, water of some amount of salinity, or any other composition of water containing particulates and having a surface tension capable of supporting the production of bubbles by the air release system 32.

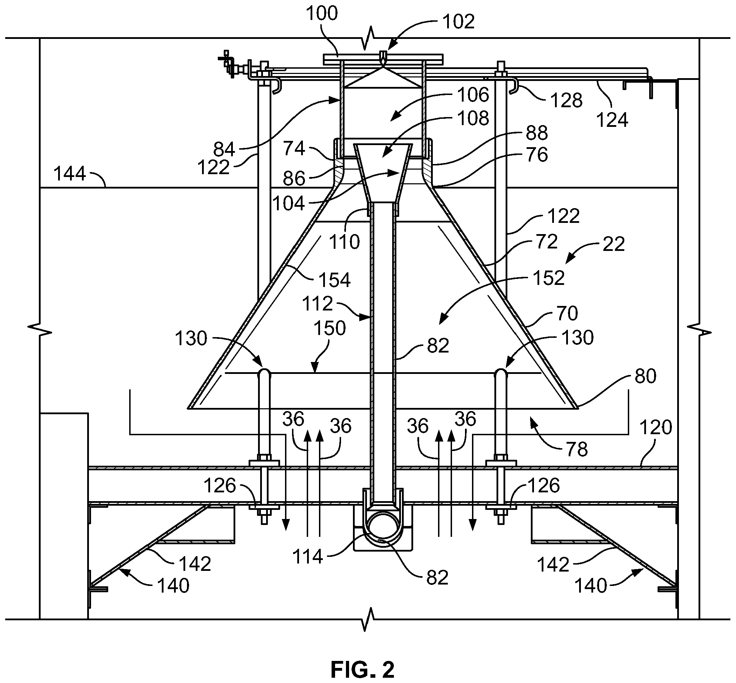

Referring now to FIG. 2, a cross sectional view of one of the plurality of foam fractionation devices 22 of a further embodiment of full flow fractionation system 20 is shown. Each device 22 includes a foam collection container or cone 70 that may include a body 72 and a neck 74 that extends from an upper end 76 of the body 72. An opening 78 is provided at a lower end 80 of the body, the opening 78 being sized to receive bubbles rising in the water within the body and/or water depending on a pressure level within foam removal piping 82, as will be discussed in greater detail hereinafter below. Adjacent the neck 74 is a collection pipe 84. The collection pipe 84 may be fittingly received by an inner surface 86 of the neck 74, or may be connected to the neck 74 with a clamp, an adhesive, or any other suitable connector. In some embodiments, the collection pipe 84 may be fittingly received along an outer surface 88 of the neck 74. The neck 74 of the cone 70 and the collection pipe 84 may be connected via a friction fit, an interference fit, a press fit, one or more clamps, soldering or any other suitable form of coupling. Further, any of the conduit or piping described herein may be connected to another pipe with an interference fit, a press fit, one or more clamps, soldering, or any other suitable form of coupling. The collection pipe 84 may be removable to allow for cleaning of one or more components of the device 22. Although the foam collection container or cone 70 is shown herein as being an inverted cone, the foam collection container or cone 70 may have any other suitable shape.

Still referring to FIG. 2, a removable cap 100 and a spray tip 102 may be positioned at an upper end of the collection pipe 84. In other embodiments, the collection pipe 84 may not be necessary and, for example, the cap 100 and/or spray tip 102 may be attached to a top portion of the cone 70 in any suitable manner. During use of the system 20, the collection pipe 84, the removable cap 100, and the spray tip 102 are connected in such a fashion that allows for pressurization within the body 72 of the cone 70. However, in some embodiments, one or more of the collection pipe 84, the removable cap 100, and the spray tip 102 are removable for cleaning purposes, or for some other reason.

A foam collection funnel 104 is positioned within the cone 70 and generally concentric with the collection pipe 84. While the funnel 104 is shown as being frustoconical, in alternative embodiments the funnel 104 may be in the form of a conduit having any other suitable shape. In illustrative embodiments, the foam collection funnel 104 is inverted with respect to the cone 70, *i.e.,* a widest portion of the funnel 104 is at an upper end thereof, while the widest portion of the cone 70 is at a lower end thereof. The relative vertical positions of the cone and the funnel 104 may be varied, for example, the funnel 104 may be positioned lower than as shown in FIG. 2 (i.e., midway along a height of the cone 70). A head space 106 exists between a mouth 108 of the foam collection funnel 104 and the removable cap 100. The mouth 108 of the foam collection funnel 104 is generally positioned within the collection pipe 84, and a funnel neck 110 is in fluid communication with a foam removal pipe 112.

In other illustrative embodiments, for example, in embodiments without the collection pipe 84, the mouth 108 of the foam collection funnel 104 may be positioned within the cone 70. The foam removal pipe 112 is a component of the piping 82. The foam removal pipe 112 extends downward, through the opening 78 of the cone 70 to a removal conduit 114. The removal conduit 114 is also a component of the piping 82. The removal pipe 112 and the removal conduit 114 may be made of the same material or may be different materials, but are generally fluidly coupled to allow for the discharge of foam through the foam collection funnel 104 and out to a waste disposal. The removal pipe 112 may be connected to removal conduit 114 in such a means as to allow the removal conduit 114 to articulate in a linear grade promoting the gravitationally induced flow of foam through the removal conduit 114 while permitting the substantially vertical articulation of removal pipe 112. The means of connection may include a coupling of flexible material, rigid material of a suitable shape to promote the angled removal conduit 114, welding or fusion, adhesive, fastening, or any other suitable means of joining the removal pipe 112 to removal conduit 114 for facilitating the flow of foam.

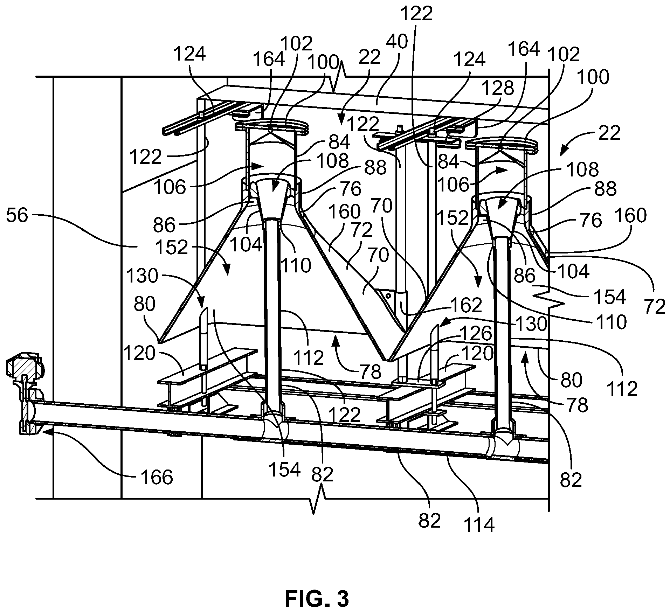

Still referring to FIG. 2, the fractionation device 22 is connected to a first or lower beam 120 with one or more connectors 122. The connectors 122 may be generally cylindrical members that intersect bores along the cone 70 and connect the first beam 120 with an upper or second beam 124 (as shown in FIG. 3). In some embodiments, the connectors 122 are coupled with a clamp 126 at a lower end thereof, and are coupled with a strip 128 at an upper end thereof. In some embodiments, four connectors 122 are included to connect the cone 70 with one of the lower beams 120 and one of the upper beams 124. In some embodiments, one or more different connectors may be utilized. The connectors 122 help to hold the device 22 in place (*i.e.,* stabilize the device 22) during use thereof. The foam collection cone 70 may have one or more bores 130 through which one or more of the connectors 122 are secured.

As illustrated in FIG. 2, one or more baffles 140 are disposed below the foam collection cone 70 of the fractionation device 22. The one or more baffles 140 may include a slanted surface 142 disposed within the water, beneath an operational water level 144. The slanted surfaces 142 of the one or more baffles 140 operate to route bubbles formed within the sump 30 to a middle of the one or more fractionation devices 22. The bubbles move upward in the direction of the arrows 36 toward the opening 78 of the foam collection cone 70. The bubbles rise up to an internal water level 150, which may be lower than the operational water level 144 due to back pressure within the piping 82. As the bubbles hit the internal water level 150, foam is generated and, as foam accumulates, the foam travels up into the cone 70 above the internal water level 150. As the foam reaches the foam collection funnel 104, the flow velocity may increase due to the reduced area between the foam collection funnel 104 and the foam collection cone 70.

The foam is then forced above the mouth 108, down into the funnel 104, and drains to the removal piping 82. The back pressure within the removal piping 82 may be controlled with a pressure regulator (not shown), as discussed in greater detail hereinafter below, or by any other suitable method for regulating pressure, such as a partially closed valve. In some embodiments, the internal water level 150 may be adjusted by modifying a back pressure in the cone 70. A chamber 152 is formed between the internal water level 150, an internal surface 154 of the cone 70, the collection pipe 84, and the cap 100 (if utilized). While the internal water level 150 is disclosed herein as being adjustable, the operational water level 144 may also be adjusted.

While a particular method for supporting the cone 70 is disclosed herein, one skilled in the art will understand that the cone 70 and/or other components of the systems disclosed herein may be supported in any suitable manner.

The foam collection cone 70 may be made of one or more of a number of materials including, but not limited to, polyethylene terephthalate (PET), polyethylene (PE), high-density polyethylene (HDPE), polyvinyl chloride (PVC), low-density polyethylene (LDPE), polypropylene (PP), Polystyrene (PS), polycarbonate (PC), or another polymer. In some embodiments, the collection cone 70 may comprise a metal or glass. Further, the components that comprise the device 22, *i.e.,* the connectors 122, the funnel 104, the piping 82, the collection pipe 84, the spray tip 102, or the cap 100, may be made of one of the aforementioned materials, or any other suitable material or combination of materials.

Referring now to FIG. 3, two devices 22 are shown in cross section. As shown in the figure, the one or more connectors 122 may be coupled with an outer surface 160 of the cone 70 by one or more brackets 162 that may be screwed, riveted, adhesively coupled, or coupled in some other fashion thereto. The foam collection cone 70 may be attached, via the connectors 122 to the one or more lower and/or upper beams 120, 124. The one or more lower and upper beams 120, 124 may be connected to one or more support members 164 extending from one or more surrounding structures, such as the first wall 40, the second wall 52, a beam, a strut, or some other surrounding structure. Still further, the foam collection cone 70 may be suspended from a ceiling or other structure above the sump 30 of the channel 24. For example, the foam collection cone 70 may be suspended in the air via one or more cords, strings, rods, or other suspension mechanisms. Still further, the foam collection cone 70 may be suspended in the air via magnetism.

Still referring to FIG. 3, a valve 166 separates the piping 82 from a pressure regulator (not shown), the valve 166 being disposed in-line with the removal conduit 114, and operable to regulate the pressure within the piping 82, thereby allowing for regulation of pressure within a chamber 152 formed by the cone 70 and the internal water level 150. As illustrated in FIG. 2, the operational water level 144, *i.e.* the water level outside of the cone 70, may be above the internal water level 150, *i.e.,* the water level inside the cone 70. The different water levels are caused by a higher internal pressure of the cone 70, which can be caused by the pressure regulator. As a result, the water levels can be different inside of the cone 70 and outside of the cone 70. By changing the pressure within the chamber 152 of the cone 70, the internal water level 150 can be controlled. For example, by increasing the back pressure within the piping 82, the internal water level 150 is lowered, whereas decreasing the back pressure within the piping 82 causes the internal water level 150 to be raised.

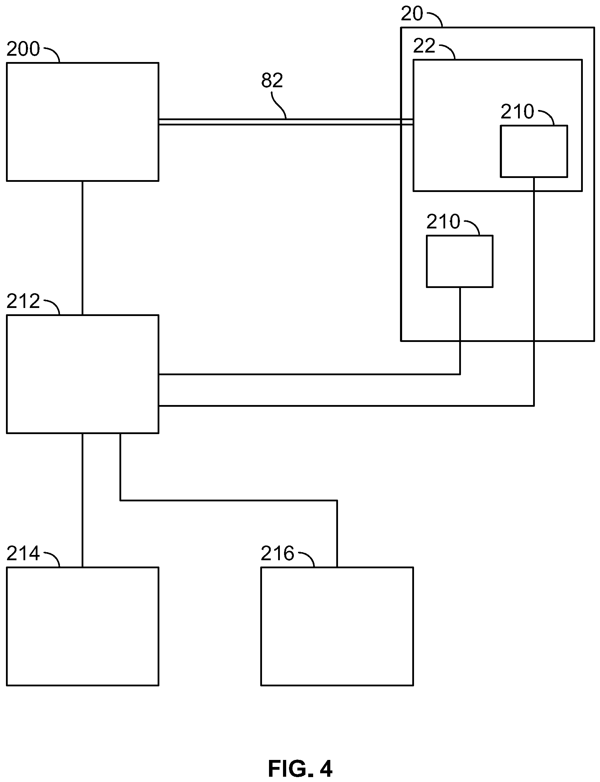

Referring now to FIG. 4, a schematic diagram illustrating operation of the system 20 is shown. The back pressure of the piping 82 can be controlled with a pressure regulator 200. The pressure regulation allows a user to vary the height of the water within the cones 70 of the devices 22 to affect foam residence time in the cone 70, thereby allowing adjustment for varying water quality conditions. The waste system back-pressure can be regulated to adjust the water level in the foam collection cones 70 thereby making the system flexible for varying water quality conditions. The system 20 can be expanded by simply adding more foam collection cones 70 and supporting structure and foam removal piping 82. The internal water level 150 within the cones 70 may be adjusted up or down based on water quality or based on any other characteristic by restricting the foam waste outlet or regulating back-pressure. As previously discussed, each foam collection funnel 104 is disposed within one of the foam collection cones 70, which increases the velocity of the foam and channels it into the piping system for subsequent removal. In systems 20 employing more than one foam collection cone 70, the internal water levels 150 within the various collection cones 70 may be controlled to be the same all at once by means of a single control point of a back pressure valve.

Still referring to FIG. 4, in some embodiments, one or more sensors 210 may be included within the cone 70 that may provide feedback to a controller 212, which may include a processor and a memory, for determining whether the internal water level 150 within the cone 70 needs to be increased or decreased. In some embodiments, feedback from the one or more sensors 210 may cause the water flow through the channel 24 to increase or decrease, may cause the amount of bubbles formed within the sump 30 by the air injectors 60 to increase or decrease, or cause the back pressure within the piping 82 to be increased or decreased. For example, any number of sensors may be used, such as an air flow meter, a carbon dioxide sensor, an ammonia sensor, an oxygen sensor, a flow sensor, a mass flow sensor, a depth gauge, a pressure sensor, a level sensor, or any other suitable sensor that can detect a pressure, a water level, a bubble rate, or another measurable characteristic within the system 20. In some embodiments, one or more manual controls may be adjusted by a human operator to control the pressure within the piping 82. In other embodiments, one or more algorithms implemented by a controller 212 may be used to control the pressure within the piping 82.

The one or more sensors 210 may be included along any portion of the interior side of the cone 70, within the sump 30, along the outer surface of the cone 70, within the piping 82, within the one or more apertures 38, along the first portion of the channel 24, or at some other point along the path of the water. One or more sensors 210 may also be provided along portions of the piping 82 and the removal conduit 114 that may indicate to a human operator or to the controller 212 that the pressure needs to be adjusted. In some embodiments, when information is sent from the sensor 210 to the controller 212, the controller 212 may automatically adjust one or more parameters of the system 20. In some embodiments, information from the one or more sensors 210 is displayed to an operator via a display 214 such as a graphical user interface or an analog display. In some embodiments, manual controls 216 are used by a human operator to provide instructions to the controller 212 as to how to operate parameters of the system 20, including the regulation of pressure.

Referring now to the operation of the fractionation device 22 and to FIGS. 1-4, the internal water level 150 can be adjusted by applying back pressure caused by the pressure regulator 200 downstream of the piping 82. The internal water level 150 may be different than the operational water level 144. Preferably, there is no need for an operator to elevate the one or more cones 70 to adjust foam recovery based on different water qualities since the pressure within the cone can be adjusted via the pressure regulator 200. Optionally, the cones 70 may be raised or lowered, either manually or electronically, to adjust the internal water levels 150. The devices 22 described herein are generally easy to adjust and tune, and an operator can do so simultaneously for multiple cones 70. The foam removal turnaround point is internal to the cone 70 to keep the cones 70 independent of the piping 82. The cones 70 are removable for ease of cleaning. In some embodiments, the cones 70 can be removed by uncoupling the one or more connectors 122, thereby allowing the one or more cones 70 to be decoupled from the system 20. An operator can wash the inside of the one or more cones by releasing the pressure periodically, thereby allowing water to flow up into the foam collection funnel 104.

Once the one or more devices 22 are installed after cleaning and the system 20 is operational, water flows from a source, left to right in FIG. 1, along the first portion 26 of the channel 24, between the baffles 140, and into the sump 30. The water that flows into the sump 30 then mixes with water already in the sump 30. Diffused air is supplied to the sump 30 via the air release system 32 attached to the bottom of the sump 30. As a result, the water that is in the sump 30 is subjected to the air bubbles caused by the air release system 32. The bubbles travel upward hitting the baffles 140, as illustrated in FIG. 2, and are directed into the bottom area of the foam collection cones 70. Dirty water is mixed laterally with this upwelling flow. As the bubbles hit the internal water level 150 in the cone 70, foam is generated, and, as it accumulates, it travels up into the cone 70 above the internal water level 150. As the foam reaches the foam collection funnel 104, the velocity increases due to the reduced area between the foam collection funnel 104 and the foam collection cone 70. The foam is then forced down the foam collection cone 70 and drains through the removal piping 82 to the removal conduit 114, and ultimately to waste.

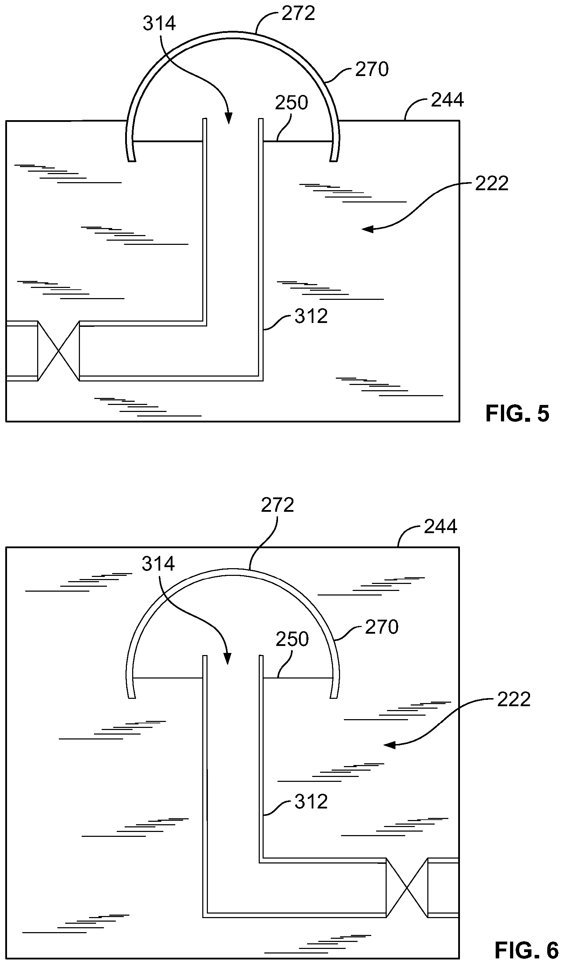

FIGS. 5 and 6 schematically depict two additional foam fractionation devices 222 that may include any components and/or features that are similar to the embodiments disclosed above and may additionally function in the same manner as any of the embodiments disclosed above. Only the differences between the embodiments of FIGS. 5 and 6 and those detailed above will be described. Referring to FIGS. 5 and 6, the foam fractionation device 222 is shown having a foam collection container 270 that is generally an inverted cup shape and may include a closed top 272, although a portion of the top could be open. In some embodiments, the foam collection container 270 is made of a flexible material. In FIG. 5, the foam collection container 270 is shown having an internal water level 250 that is below an operational water level 244 and is shown as having at least a portion of the container 270 above the operational water level 244. In FIG. 6, the foam collection container 270 is shown as having an internal water level 250 that is below the operational water level 244 and is shown with the entirety of the foam collection container 270 submerged below the operational water level 244. Both embodiments are depicted as having a foam removal conduit 312 with an opening 314 above the internal water level 250.

Any of the full flow fractionation systems 20 and/or full foam fractionation devices 22 disclosed herein may be utilized within, for example, a recirculating aquaculture system (RAS), that includes any number of other different components, for example, tanks, collectors, filters, mixed bed bioreactors, oxygenators, pumps, disinfectors, or any other suitable components.

It will be appreciated by those skilled in the art that while the invention has been described above in connection with particular embodiments and examples, the invention is not necessarily so limited, and that numerous other embodiments, examples, uses, modifications, and departures from the embodiments, examples and uses are intended to be encompassed by the claims attached hereto. Various features and advantages of the invention are set forth in the following claims.

## Claims

1. A foam fractionation device comprising:
a foam collection container having a body;
a collection tube coupled to the collection container; and
a foam collection conduit coupled with foam removal piping disposed within a chamber formed by the body of the foam collection container,
wherein the foam collection container and the collection tube are coupled to allow for pressurization within the chamber, and
wherein a mouth of the foam collection conduit is operable to receive foam.

2. The foam fractionation device of claim 1, wherein the body of the foam collection container is in the form of an inverted cone and the foam collection container further includes a neck extending upwardly from the body.

3. The foam fractionation device of claim 1 or claim 2, further including a cap disposed at an upper end of the collection tube; and,
optionally or preferably, wherein the cap is removable.

4. The foam fractionation device of claim 1 or claim 2 or claim 3, further comprising one or more connectors that extend through one or more bores along the body of the foam collection container; and,
optionally or preferably, wherein the one or more connectors are coupled with one or more support members exterior to the foam fractionation device.

5. The foam fractionation device of claim 1 or any of claims 2 to 4, wherein the foam removal piping is fluidly coupled with a pressure regulating device; and,
optionally or preferably, wherein the pressure regulating device is operable to cause an internal water level within the chamber to be lower than an operational water level exterior to the cone.

6. A foam fractionation system comprising:
a channel comprising a first portion and a second portion;
a sump disposed within the channel intermediate the first portion and the second portion;
an air injection system disposed along a bottom surface of the sump; and
a foam fractionation device disposed within the sump above the air injection system, the device comprising:
a foam collection cone forming a chamber;
a collection tube coupled with the collection cone; and
a foam collection funnel coupled with foam removal piping disposed within the chamber defined by the collection cone.

7. The foam fractionation system of claim 6, further comprising a first wall disposed between the sump and the second portion of the channel; and,
optionally or preferably, further comprising one or more apertures disposed within a lower end of the first wall.

8. The foam fractionation system of claim 6 or claim 7, wherein the removal piping is fluidly coupled with a pressure regulation device.

9. The foam fractionation system of claim 6 or any of claims 7 to 8, wherein the foam collection funnel is disposed inverted with respect to the foam collection cone.

10. The foam fractionation system of claim 6 or any of claims 7 to 9, wherein a headspace exists between the foam collection funnel and the cap.

11. The foam fractionation system of claim 6 or any of claims 7 to 10, wherein the device is coupled via one or more connectors to one or more beams.

12. A method of foam fractionation comprising:
flowing water through a channel having a first portion and a second portion;
injecting air through an air injection system disposed within a sump, the sump located intermediate the first portion and the second portion of the channel;
receiving foam into a foam fractionation device, the foam fractionation device disposed within the sump above the air injection system, the device comprising:
a foam collection container defining a chamber;
a collection tube coupled with the foam collection container; and
a foam collection conduit coupled with foam removal piping disposed within the chamber defined by the foam collection container; and
pressurizing the foam removal piping with a pressure regulating device to regulate an internal water level within the foam collection container.

13. The method of claim 12 further comprising controlling, by a controller, the pressure within the removal piping; and,
optionally or preferably, wherein:
(i) the step of controlling the pressure further includes the step of adjusting, via one or more manual controls, the pressure within the removal piping; and/or
(ii) the step of controlling the pressure further includes the step of receiving, by the controller, information by one or more sensors related to one or more characteristics of one of a flow of water through the channel, a first pressure within the foam removal piping, or an operational water level of the channel.

14. The method of claim 12 or claim 13, wherein the step of injecting air through the air injection system further includes controlling, by a controller, an amount of air injected into the sump.

15. The method of claim 12 or any of claims 13 to 15, wherein the foam fractionation device further includes a cap disposed at an end of the collection tube and the foam collection container, the collection tube, and the cap are coupled to allow for pressurization within a chamber formed by the body, the collection tube, and the cap.
